# EUROPÄISCHE PATENTSCHRIFT

(11) **EP 2 790 930 B1**
(45) Veröffentlichungstag und Bekanntmachung des Hinweises auf die Patenterteilung: **14.03.2018**
(21) Anmeldenummer: 12797868.2
(22) Anmeldetag: 03.12.2012
(51) Int. Cl.: B60C 11/04, B60C 11/24, B60C 11/12

(54) **FAHRZEUGLUFTREIFEN FÜR NUTZFAHRZEUGE**
PNEUMATIC VEHICLE TIRE FOR UTILITY VEHICLES
PNEU DE VÉHICULES UTILITAIRES

(30) Priorität: 14.12.2011 DE 102011056427
(43) Veröffentlichungstag der Anmeldung: 22.10.2014
(73) Patentinhaber: Continental Reifen Deutschland GmbH, 30165 Hannover (DE)
(72) Erfinder: KORTE, Hans-Bernd, 31515 Wunstorf (DE); SEIDEL, Michael, 30171 Hannover (DE)
(74) Vertreter: Finger, Karsten
(86) Internationale Anmeldenummer: PCT/EP2012/074246
(87) Internationale Veröffentlichungsnummer: WO 2013/087440

(56) Entgegenhaltungen:
- EP-A2- 0 335 694
- WO-A1-2011/002445
- DE-T2- 60 108 972
- US-A1- 2011 017 374

## Beschreibung

Die Erfindung betrifft einen Fahrzeugluftreifen für Nutzfahrzeuge mit einem profilierten Laufstreifen mit in Umfangsrichtung U des Fahrzeugluftreifens erstreckten Profilbändern, welche in radialer Richtung R nach außen von einer die Bodenkontaktoberfläche bildenden Mantelfläche des Fahrzeugluftreifens begrenzt werden, und mit Rillen, welche jeweils zwei benachbarte Profilbänder voneinander trennen und in radialer Richtung R des Fahrzeugluftreifens nach innen hin durch einen Rillengrund begrenzt werden, mit Abriebindikatoren (TWI) in einer oder mehrerer - insbesondere in allen - dieser Rillen zur Anzeige einer Mindestprofiltiefe der Fahrzeugluftreifen im Normalbetrieb des Fahrzeugluftreifens, sowie mit Einschnitten in von derartigen Rillen begrenzten Profilbändern, welche sich in radialer Richtung R des Fahrzeugluftreifens ausgehend von der Mantelfläche nach innen in einem ersten radialen Erstreckungsbereich bis in eine Tiefe T₃ als Einschnitt erstrecken, welcher eine Einschnittbreite B₃ aufweist, und ab der Tiefe T₃ in einem zweiten radialen Erstreckungsbereich als erweiterter Kanal mit einer Kanalbreite B und einer in radialer Richtung R gemessenen Kanalhöhe H ausgebildet sind.

Für Nutzfahrzeugreifen ist es bekannt, dass diese zum Teil nach Erreichen der Mindestprofiltiefe noch einmal in ihrem Profil begrenzt nachgeschnitten werden, wodurch eine begrenzte Verlängerung der Nutzungsdauer des Nutzfahrzeugreifens ermöglicht wird. Beim Nachschneiden werden dabei zumindest die Hauptrillen, welche üblicherweise breite Umfangsrillen sind, nachgeschnitten, sodass die nachgeschnittenen Umfangsrillen bis in eine Tiefe unterhalb des Rillengrundes der ursprünglich vorhandenen Umfangsrillen reichen. Hierdurch wird sichergestellt, dass der Nutzfahrzeugreifen in seiner langen, regulären Laufdauer bis zum Nachschneiden eine hohe Schutzwirkung gegen Eindringen von Steinen durch die breiten Umfangsrillen hindurch aufrechterhalten werden kann. Sobald die Reifen derart abgefahren sind, dass sie nur noch die zugelassene Mindestprofiltiefe für die wirksame Abwasserableitung und Griffwirkung entfalten, werden die Rillen nachgeschnitten. Danach sind die Abwasserableitung und die Griffwirkung wieder für eine zeitlich begrenzte Verlängerung der Nutzung hoch wirksam wiederhergestellt. Eine weitere Verlängerung erfolgt nicht. Zur Anzeige des erforderlichen Nachschneidens werden hierzu in der Umfangsrille ausgebildete Indikatoren, welche zumindest die verbleibende Mindestprofiltiefe im regulären Betrieb anzeigen, ausgebildet. Diese werden üblicherweise als quer zur Umfangsrille verlaufende Erhöhungen des Rillengrundes ausgebildet, deren äußere Oberfläche die Mindestprofiltiefe anzeigt. Sobald diese Abriebindikatoren mit der Straßenoberfläche in Abriebverbindung stehen, ist dies ein Zeichen dafür, dass die Mindestprofiltiefe erreicht ist und dass spätestens jetzt ein Nachschneiden erfolgen sollte. Darüber hinaus zeigen die Indikatoren damit dem Nutzer an, dass nun auch nach Nachschneiden, bei welchem auch die Indikatoren weggeschnitten werden, nicht mehr der reguläre Betrieb, sondern nur noch der begrenzte Nachschneidebetrieb des Fahrzeugluftreifens möglich ist. Der Aufwand zum Nachschneiden derartiger Fahrzeugluftreifen für Nutzfahrzeuge ist relativ groß. Die Reifen werden üblicherweise vom Fahrzeug demontiert und werden dann mit speziellen Nachschneidewerkzeugen individuell nachgeschnitten. Dabei muss individuell darauf geachtet werden, dass die erlaubten Nachschneidetiefen nicht überschritten werden und dass das Nachschneiden möglichst bei allen Reifen des Fahrzeuges gleichmäßig über die gesamten Reifen hinweg erfolgt. Ungenauigkeiten, Abweichungen, Ungleichmäßigkeiten könnten die Fahreigenschaften und die weitere Einsatzmöglichkeit des Fahrzeugluftreifens für Nutzfahrzeuge für den beabsichtigten Zweck negativ beeinflussen. Um dies weitgehend zu vermeiden, wird ein großer Aufwand zur Qualitätssicherung betrieben.

Es sind Fahrzeugluftreifen bekannt, bei denen Umfangsrillen und Feineinschnitte ausgebildet sind, die sich in ihrer radialen Erstreckungstiefe über maximale die Profiltiefe des Reifens in dessen regulärem Betrieb erstrecken und die innerhalb dieser Erstreckungstiefe an ihrem radial inneren Erstreckungsende als kanalförmige Öffnungen erweitert ausgebildet sind. Die bekannten Ausbildungen dienen dazu, dass während des regulären Normalbetriebes, in welchem die Feineinschnitte sich nach einiger Zeit in ihrem Querschnitt öffnen zusätzliches Rillenvolumen zur Aufnahme von Wasser geschaffen wird. Bei den bekannten Ausbildungen erstreckt sich der Feineinschnitt einschließlich seiner kanalförmigen Erweiterung dabei bis maximal zur normalen Profiltiefe. Sobald bei derartigen Reifen die vorhandenen Abriebindikatoren die Mindestprofiltiefe des Reifens anzeigen, erfolgt auch bei diesen Reifen das aufwendige Nachschneiden des Profils.

Aus der EP 0 335 694 A2 ist ein Fahrzeugluftreifen gemäß den Merkmalen des Oberbegriffs bekannt.

Der Erfindung liegt daher die Aufgabe zugrunde, einen derartigen Fahrzeugluftreifen für Nutzfahrzeuge zu schaffen, bei dem nach regulärer Laufdauer ohne den Aufwand des Nachschneidens eine begrenzte Nutzungsverlängerung ermöglicht wird.

Die Aufgabe wird erfindungsgemäß durch die Ausbildung eines Fahrzeugluftreifens für Nutzfahrzeuge mit einem profilierten Laufstreifen mit in Umfangsrichtung U des Fahrzeugluftreifens erstreckten Profilbändern, welche in radialer Richtung R nach außen von einer die Bodenkontaktoberfläche bildenden Mantelfläche des Fahrzeugluftreifens begrenzt werden, und mit Rillen, welche jeweils zwei benachbarte Profilbänder voneinander trennen und in radialer Richtung R des Fahrzeugluftreifens nach innen hin durch einen Rillengrund begrenzt werden, mit Abriebindikatoren (TWI) in einer oder mehrerer - insbesondere in allen - dieser Rillen zur Anzeige einer Mindestprofiltiefe der Fahrzeugluftreifen im Normalbetrieb des Fahrzeugluftreifens, sowie mit Einschnitten in von derartigen Rillen begrenzten Profilbändern, welche sich in radialer Richtung R des Fahrzeugluftreifens ausgehend von der Mantelfläche nach innen in einem ersten radialen Erstreckungsbereich bis in eine Tiefe T₃ als Einschnitt erstrecken, welcher eine Einschnittbreite B₃ aufweist, und ab der Tiefe T₃ in einem zweiten radialen Erstreckungsbereich als erweiterter Kanal mit einer Kanalbreite B und einer in radialer Richtung R gemessenen Kanalhöhe H ausgebildet sind, gemäß den Merkmalen von Anspruch 1 gelöst, bei der der zweite radiale Erstreckungsbereich dieser Einschnitte eines Profilbandes sich in radialer Richtung R nach innen bis in eine Position unterhalb des Rillengrundes der das Profilband begrenzenden Rille erstreckt,
wobei der erste radiale Erstreckungsbereich des Einschnittes jeweils in radialer Richtung R des Reifens nach innen in einer Position im radialen Abstand **T₂≥ 0mm** oberhalb der durch den Abriebindikator (TWI) in der nächstliegend angeordneten Rille angezeigten Mindestprofiltiefe im Normalbetrieb endet.

Durch diese Ausbildung wird ermöglicht, dass während des regulären Normalbetriebes des Nutzfahrzeugreifens weiterhin das Eindringen von Steinen, durch die breiten Hauptrillen, welche bis auf die für Nutzfahrzeugreifen für den Normalbetrieb vorgesehene Profiltiefe reichen, sehr zuverlässig vermieden wird. Der Nutzer erhält aufgrund der in den Hauptrillen ausgebildeten Abriebindikatoren die Information darüber, dass die Profiltiefe für den Einsatz im Normalbetrieb ihre Mindestprofiltiefe erreicht hat, sobald der Abriebindikator das Erreichen anzeigt. Darüber hinaus wird bei Erreichen der durch die Abriebindikatoren angezeigten Mindestprofiltiefe im Normalbetrieb des Nutzfahrzeugreifens die Profiltiefe durch ihren dann geöffneten Zustand der Hauptrillen für den Einsatz im Verlängerungsbetrieb verändert. Ohne aufwendiges Nachschneiden kann somit der nach regulärer Laufdauer eines Nutzfahrzeugreifenprofils begrenzte verlängerte Betrieb ermöglicht werden, wobei der Nutzer die Information des Betriebswechsels auch mit angezeigt bekommt. Ungenauigkeiten oder Fehler, die beim Nachschneiden erfolgen könnten, werden von vorne herein vermieden, das gewünschte Fahrverhalten des Reifens kann somit von vorne herein bei der Konstruktion und Herstellung des Reifens mit eingestellt werden und unterliegt nicht den beim Nachschneiden möglichen individuell denkbaren Ungenauigkeiten. Durch das Enden des ersten radialen Erstreckungsbereiches oberhalb der durch den Abriebindikator angezeigten Mindestprofiltiefe können Traktion, Abrieb und Rollwiderstand weiter optimiert werden. Der Übergang in den Verlängerungsabschnitt ermöglicht eine vollwirksame Rille sichergestellter Wasseraufnahmekapazität und Traktionseigenschaften bei Erreichen der Mindestprofiltiefe im Normalbetrieb.

Besonders vorteilhaft ist die Ausbildung eines Fahrzeugluftreifens gemäß den Merkmalen von Anspruch 2, wobei in wenigstens einem Profilband axial voneinander beabstandet mehrere derartige -insbesondere in ihrer Haupterstreckungsrichtung parallel zueinander ausgerichtete - Einschnitte ausgebildet sind. Hierdurch lässt sich der Abrieb und Rollwiderstand für den gesamten Lebenszyklus optimiert individuell einstellen. Außerdem kann für den üblichen Lebensverlängerungszyklus die Drainagewirkung zum Ableiten des Wassers optimiert einfach werden.

Besonders vorteilhaft ist die Ausbildung eines Fahrzeugluftreifens gemäß den Merkmalen von Anspruch 3, wobei auch die Einschnitte in Umfangsrichtung U des Fahrzeugluftreifens erstreckt sind. Die Einschnitte sind in Richtung des üblichen manuellen Nachschneideprozesses ausgerichtet und ermöglichen somit direkt die Erzielung der damit verbundenen, bekannten Vorteile.

Besonders vorteilhaft ist die Ausbildung eines Fahrzeugluftreifens gemäß den Merkmalen von Anspruch 4, wobei in wenigstens zwei axial von einander beabstandeten Positionen im

Profilband über den Umfang des Fahrzeugluftreifens verteilt mehrere in Umfangsrichtung U des Fahrzeugluftreifens erstreckte Einschnitte angeordnet sind, wobei die in der ersten axialen Position angeordneten Einschnitte und die in der zweiten axialen Position angeordneten Einschnitte jeweils in ihrer Umfangsposition zueinander unter Überlappung ihrer Umfangserstreckungslänge versetzt angeordnet sind. Hierdurch können Rillenanordnungen für den Verlängerungsbetrieb optimiert ohne Nachschneiden einfach hergestellt werden. Darüber hinaus kann hierdurch der Reifenabrieb optimiert eingestellt werden.

Besonders vorteilhaft ist die Ausbildung eines Fahrzeugluftreifens gemäß den Merkmalen von Anspruch 5, wobei auch die Einschnitte in Umfangsrichtung U des Fahrzeugluftreifens über den gesamten Umfang des Fahrzeugluftreifens erstreckt sind. Hierdurch kann der Reifen für den Verlängerungsbetrieb auch ohne Nachschneiden mit den bisher durch Nachneiden erzeugten Umfangsrillen unter Nutzung derer Vorteile mit ausgebildet werden.

Besonders vorteilhaft ist die Ausbildung eines Fahrzeugluftreifens gemäß den Merkmalen von Anspruch 6, wobei die Einschnitte als schräg verlaufende Einschnitte unter Einschluss eines Winkels α zur Umfangsrichtung U des Fahrzeugluftreifens mit 0°<α<45°-insbesondere mit 20°≤a≤45°- erstreckt sind. Hierdurch ist ein gezieltes Einstellen von Nass- und Wintertraktionsfähigkeit des Reifens durch Wahl des Winkels möglich.

Besonders vorteilhaft ist die Ausbildung eines Fahrzeugluftreifens gemäß den Merkmalen von Anspruch 7, wobei Einschnitte durch eine Knickstelle in zwei benachbarte Erstreckungsbereiche aufgeteilt sind, in denen die Einschnitte jeweils mit unterschiedlicher Neigung ausgebildet sind. Hierdurch können die Abriebeigenschaften des Reifens weiter optimiert werden.

Besonders vorteilhaft ist die Ausbildung eines Fahrzeugluftreifens gemäß den Merkmalen von Anspruch 8, wobei der zweite radiale Erstreckungsbereich des Einschnittes jeweils in radialer Richtung R des Reifens nach innen bis in eine Tiefe T₁ mit 5mm≤T₁≤6mm unterhalb der durch den Abriebindikator (TWI) in der nächstliegend angeordneten Rille angezeigten Mindestprofiltiefe im Normalbetrieb reicht. Hierdurch ist die optimale Verlängerung der Lebensdauer ohne manuelles Nachschneiden möglich.

Besonders vorteilhaft ist die Ausbildung eines Fahrzeugluftreifens gemäß den Merkmalen von Anspruch 9, wobei die Erstreckungstiefe T₃ des ersten Erstreckungsbereichs des Einschnittes jeweils mit T₃≥ (0,5 P_{T}) ausgebildet ist, wobei P_{T} die maximale Profiltiefe in der Rille ist. Hierdurch kann eine weitere Optimierung des Abriebverhaltens und des Rollwiderstandes über eine lange Lebensdauer im Normalbetrieb erzielt werden.

Besonders vorteilhaft ist die Ausbildung eines Fahrzeugluftreifens gemäß den Merkmalen von Anspruch 10 mit einer Kanalbreite B mit B₃≤ B ≤ 5mm. Hierdurch sind die im Verlängerungsbetrieb wirksamen Rillen mit hierfür optimierter Breite ausgebildet.

Besonders vorteilhaft ist die Ausbildung eines Fahrzeugluftreifens gemäß den Merkmalen von Anspruch 11 mit einer Einschnittbreite B₃ mit 0,5mm ≤ B₃≤ 1,5mm.

Besonders vorteilhaft zur Optimierung des Abriebverhaltens und des Rollwiderstandes ist die Ausbildung eines Fahrzeugluftreifens gemäß den Merkmalen von Anspruch **12**, wobei der erste radiale Erstreckungsbereich des Einschnittes längs seiner radialen Erstreckung mit einen gekrümmten, wellenförmigen oder zickzackförmigen Verlauf ausgebildet ist.

Darüber hinaus wird hierdurch ein zusätzlicher Schutz gegen das Eindringen von Fremdkörpern - wie z.B. Steinen - in den ersten und den zweiten Erstreckungsbereich des Einschnittes bewirkt.

Die Erfindung wird im Folgenden an Hand der in den Figuren 1 bis 10 dargestellten Ausführungsbeispiele näher erläutert. Hierin zeigen
- Fig. 1: eine Schnittdarstellung eines Fahrzeugluftreifens für Nutzfahrzeugreifens in perspektivischer Darstellung,
- Fig. 2: eine Draufsicht auf das Laufstreifenprofil von Fig.1,
- Fig. 3: eine Darstellung des Laufstreifenprofils von Fig.2 in Schnittdarstellung gemäß Schnitt III-III von Fig.2,
- Fig. 4: eine Schnittdarstellung des Einschnitts von Fig.3 in alternativer Ausführungsform,
- Fig. 5: eine Draufsicht auf das Laufstreifenprofil von Fig.1 analog zur Darstellung von Fig.2 mit alternativer Ausbildung der Anordnung der Feineinschnitte,
- Fig. 6: eine Draufsicht auf das Laufstreifenprofils von Fig.1 und Fig.2 mit alternativer Ausführung der Einschnitte,
- Fig. 7: einen Ausschnitt des Laufstreifenprofils von Fig.1 und Fig.2 mit alternativer Ausführung der Einschnitte,
- Fig. 8: eine Querschnittdarstellung des Laufstreifenprofils von Fig.7 gemäß Schnitt VIII-VIII,
- Fig. 9: einen Ausschnitt eines Laufstreifenprofils von Fig. 1 in Draufsicht mit alternativer Ausführung der Einschnitte und
- Fig.10: eine Schnittdarstellung des Einschnitts von Fig.3 in alternativer Ausführungsform.

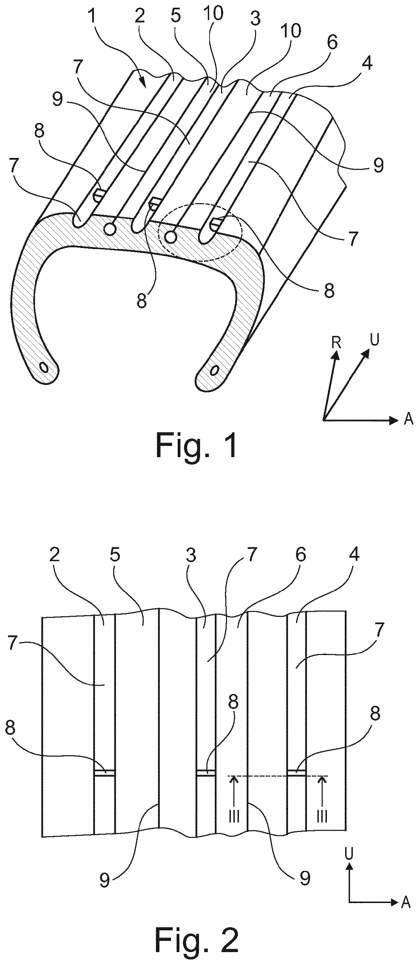

Die Figuren 1 bis 3 zeigen einen Nutzfahrzeugluftreifen 1 mit einem profilierten Laufstreifen bekannter Art mit in axialer Richtung A des Fahrzeugluftreifens nebeneinander angeordneten und jeweils durch Umfangsrillen 2,3 und 4 voneinander beabstandeten Profilbändern. In den Fig. 1 bis 3 sind die Profilbänder Umfangsrippen. Zwischen den beiden axial benachbarten in Umfangsrichtung U ausgerichteten und über den Umfang des Fahrzeugluftreifens erstreckten Umfangsrillen 2 und 3 ist eine Umfangsrippe 5 bekannter Art ausgebildet, welche sich über den gesamten Umfang des Fahrzeugluftreifens erstreckt und in Umfangsrichtung U ausgerichtet ist. Zwischen den axial benachbarten Umfangsrillen 3 und 4 ist in bekannter Weise eine über den gesamten Umfang des Fahrzeugluftreifens erstreckte und in Umfangsrichtung U ausgerichtete Umfangsrippe 6 ausgebildet. Die Umfangsrillen 2,3 und 4 sind in radialer Richtung R des Reifens nach innen hin durch einen über den gesamten Umfang des Fahrzeugluftreifens erstreckten und in Umfangsrichtung U ausgerichteten Rillengrund 7 begrenzt. Die Umfangsrille 2 begrenzt zu der in Fig.1 und Fig.2 auf der linken Seite dargestellten Reifenschulter hin eine über den gesamten Umfang des Fahrzeugluftreifens erstreckte und in Umfangsrichtung U ausgerichtete Umfangsrippe, welche eine Schulterrippe bildet. Die Umfangsrille 4 begrenzt zu der in den Fig.1 und Fig.2 auf der rechten Seite dargestellten Reifenschulter hin eine über den gesamten Umfang des Fahrzeugluftreifens erstreckte und in Umfangsrichtung U ausgerichtete Umfangsrippe, welche eine Schulterrippe bildet.

Die beiden Schulterrippen sowie die beiden Umfangsrippen 5 und 6 sind in radialer Richtung R nach außen hin mit einer radial äußeren Oberfläche 10 begrenzt, welche die die Straßenkontaktoberfläche bildende Mantelfläche des Reifens bildet.

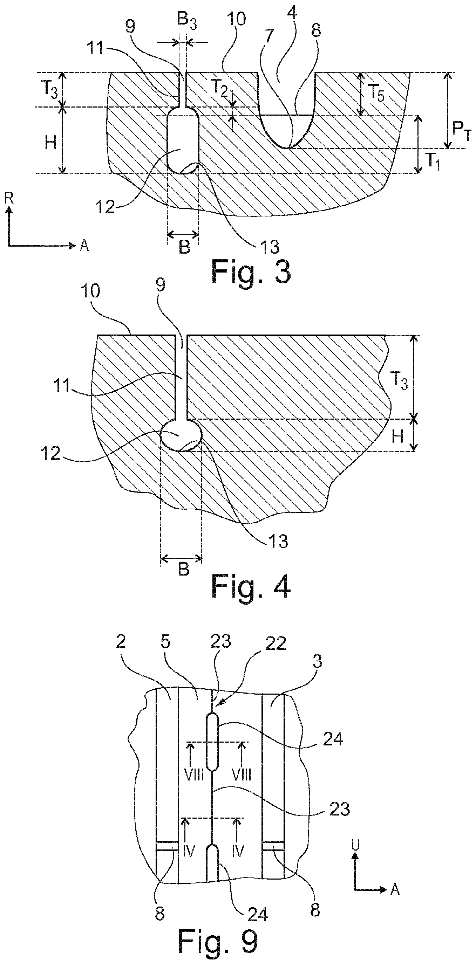

Die Umfangsrillen 2,3 und 4 sind zu beiden axialen Seiten hin jeweils durch eine Rillenwand begrenzt, welche sich, ausgehend vom Rillengrund 7 der jeweiligen Umfangsrille 2,3 bzw. 4, nach radial außen bis zu der radial äußere Oberfläche 10 erstreckt. In den Umfangsrillen 2,3 und 4 sind in bekannter Weise im Rillengrund 7 über den Umfang des Fahrzeugluftreifens verteilt mehrere jeweils einen Abriebindikator (TWI) bildende Erhebungen 8 bekannter Art ausgebildet, welche sich quer zur Haupterstreckungsrichtung der jeweiligen Umfangsrille 2,3 bzw. 4 und somit im dargestellten Ausführungsbeispiel in axialer Richtung A des Reifens durch die jeweilige Umfangsrille 2, 3 bzw. 4 hindurch erstreckt. Der jeweilige Abriebindikators 8 erstreckt sich bis in eine Höhe aus dem Rillengrund 7, welcher dem maximal zulässigen Maß T₅ des Abriebes entspricht und somit die minimal noch zulässige Restprofiltiefe (P_{T}-T₅) des Laufstreifenprofils eines Nutzfahrzeugluftreifens im regulären Normalbetrieb angibt. In der in Fig. 3 dargestellten Ausführung ist T₅ < P_{T}, wobei P_{T} die maximale Profiltiefe in den gemessenen Umfangsrillen 2,3 und 4 angibt. Sowohl die maximale Profiltiefe P_{T} als auch das zulässige Maß des Abriebes werden in radialer Richtung R ausgehend von der Mantelfläche des Reifens nach innen gemessen. Das zulässige Maß T₅ ist üblicherweise mit (0,5 P_{T}) ≤ T₅< P_{T} ausgebildet.

In den Umfangsrippen 5 und 6 ist jeweils ein Feineinschnitt 9 ausgebildet, welcher sich in Umfangsrichtung U ausgerichtet über den gesamten Umfang des Fahrzeugluftreifens erstreckt. Wie in den Fig. 1 und 3 zu erkennen ist, erstreckt sich der Feineinschnitt 9 ausgehend von der radial äußeren Oberfläche 10 in radialer Richtung R nach innen zunächst über einen ersten radial äußeren Erstreckungsbereich 11 bis in eine von der radial äußeren Oberfläche 10 in radialer Richtung R nach innen hin gemessene Tiefe T₃ und in radialer Verlängerung nach innen direkt im Anschluss an diesen radial äußeren Erstreckungsbereich 11 über einen zweiten, radial inneren Erstreckungsbereich 12 mit einer in radialer Richtung R nach innen hin gemessenen Erstreckungshöhe H. Im radial äußeren Erstreckungsbereich 11 ist der Feineinschnitt 9 dabei als dünner Feineinschnitt mit einer Spaltbreite B₃ des Einschnitts ausgebildet. Im radial inneren Erstreckungsbereich 12 ist der Feineinschnitt 9 als erweitert ausgebildeter Durchgangskanal ausgebildet. Der Durchgangskanal ist mit einer senkrecht zur Längserstreckungsrichtung des Feineinschnittes 9 und somit im dargestellten Ausführungsbeispiel in axialer Richtung A des Fahrzeugluftreifens gemessenen maximalen Erstreckungsbreite, der Kanalbreite B und mit einer in radialer Richtung R gemessenen Erstreckungshöhe, der Kanalhöhe H ausgebildet. Die Kanalbreite B ist mit B₃ ≤ B ≤ 5 mm ausgebildet. Im dargestellten Ausführungsbeispiel ist B mit (2B₃)≤B≤5mm ausgebildet.

Die Spaltbreite B₃ ist mit 0,5 mm ≤ B₃ ≤ 1,5 mm ausgebildet.

Die Erstreckungstiefe T₃ der ersten radial äußeren Erstreckungsbereich 11 ist mit T₃ ≥ (0,5 P_{T}) ausgebildet. Der als Durchgangskanal ausgebildete radial innere Erstreckungsabschnitt 12 ist in radialer Richtung R nach innen hin von einem den Kanalgrund bildenden Einschnittsgrund 13 begrenzt, welcher sich über die gesamte Längserstreckung des Feineinschnittes 9 - d.h. im dargestellten Ausführungsbeispiel in Umfangsrichtung U des Reifens - erstreckt. Die Erstreckungshöhe H des radial inneren Erstreckungsbereichs 12 des Feineinschnitts 9 erstreckt sich zwischen den Einschnittsgrund 13 und dem ersten radial äußeren Erstreckungsbereich 11. Der radial innere Erstreckungsbereich 12 und somit der Durchgangskanal erstreckt sich dabei nach radial außen bis in eine Position, welche im radialen Abstand T₂ radial außerhalb der die Abriebindikatoren 8 in der angrenzenden Umfangsrille 4 nach radial außen hin begrenzenden und somit die Mindestprofiltiefe anzeigenden Oberfläche, wobei T₂ ≥ 9 mm ist. Der Einschnittsgrund 13 ist in einer radialen Position innerhalb der radialen Position des Rillengrundes 7 der Umfangsrillen 2,3 und 4. Die radiale Erstreckungstiefe (T₃+H) des Feineinschnittes 9 ist größer als die Profiltiefe P_{T}.

Der in radialer Richtung R gemessene Abstand T₁ zwischen dem den Feineinschnitt 9 nach radial innen hin begrenzenden Kanalgrund 13 und dem die Abriebindikatoren 8 in der angrenzenden Umfangsrille 4 nach radial außen hin begrenzenden Oberfläche und somit der angezeigten Mindestprofiltiefe ist mit 5mm ≤ T₁ ≤ 6mm ausgebildet.

Die radiale Erstreckungshöhe H des radial inneren Erstreckungsbereichs 12 des Einschnitts 9 und somit die Kanalhöhe ist mit H= (T₂ + T₁) gebildet.

In dem in Fig.3 dargestellten Ausführungsbeispiel ist der Kanal 12 mit einer im Wesentlichen rechteckigen Querschnittskontur mit abgerundeten Querschnittecken ausgebildet. In anderer - nicht dargestellter - Ausführung ist die Querschnittkontur des Kanals 12 oval oder elliptisch. In Fig.4 ist eine Ausführung beispielhaft dargestellt, in welcher der kanalförmig ausgebildete radial innere Erstreckungsbereichs 12 des Einschnitts 9 mit einer runden Querschnittkontur ausgebildet ist. Bei dieser Ausbildung ist B= H gewählt.

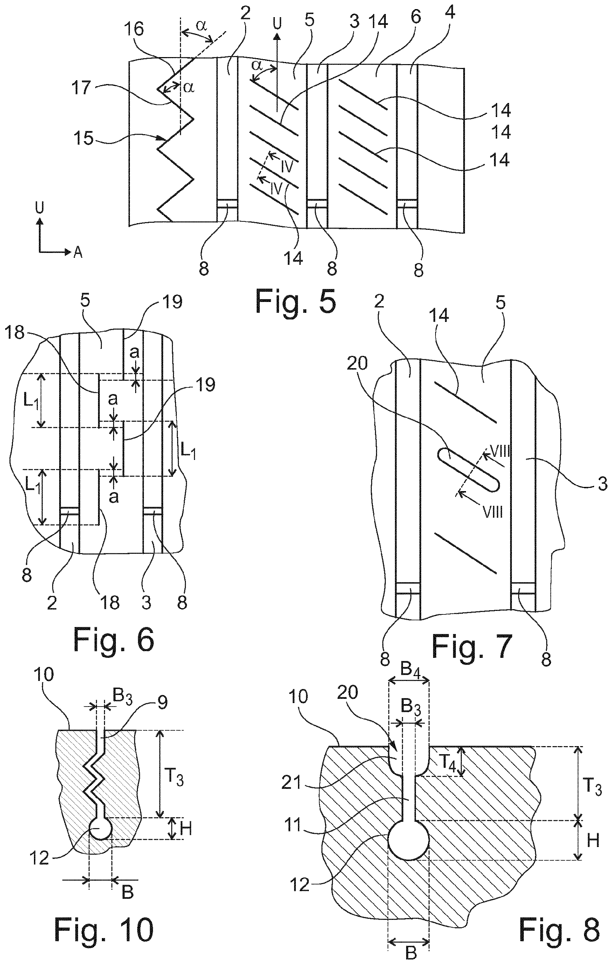

Fig.5 zeigt ein Ausführungsbeispiel des Laufstreifenprofils von Fig.1 und Fig.2, bei dem in alternativer Form in den Profilrippen 5 und 6 jeweils parallel zueinander verlaufend angeordnete, geradlinig erstreckte Feineinschnitte 14 ausgebildet sind, welche unter Einschluss eines Neigungswinkels α zur Umfangsrichtung U ausgerichtet sind. Die Feineinschnitte 14 sind dabei in ihrem senkrecht zu ihrer Haupterstreckungsrichtung ausgebildeten Querschnitt analog zu den Querschnitten der Feineinschnitte 9 mit radial äußerem Erstreckungsbereichs 11 und mit radial innerem Erstreckungsbereich 12 ausgebildet. Die Angaben über die Erstreckungshöhen, Tiefen und Querschnittsform entsprechen den im Zusammenhang mit den oben genannten Ausführungsbeispielen der Feineinschnitte 9 beschriebenen und/oder dargestellten Ausführungen. Lediglich die Ausrichtung der Feineinschnitte 9 innerhalb der Umfangsrippe 5 bzw. 6 ist anders gewählt. Die Ausrichtung ist nicht in Umfangsrichtung, sondern wie unter Einschluss des Neigungswinkels α zur Umfangsrichtung U schräg verlaufend - wie in Fig.5 gezeigt - gewählt.

In Fig. 5 ist dabei eine Ausführung dargestellt, bei denen die Feineinschnitte 14 der Umfangsrippe 5jeweils im axialen Abstand zur benachbarten, die Umfangsrippe 5 begrenzenden Umfangsrille 2 und 3 enden. In anderer - nicht dargestellter - Ausführung erstrecken sich die Feineinschnitte 14 durch die gesamte axiale Erstreckungsbreite der Umfangsrippe 5 hinweg und münden jeweils in die angrenzenden Umfangsrillen 2 und 3.

Fig.5 zeigt darüber hinaus am Beispiel der links dargestellten Schulterrippe, ein weiteres Ausführungsbeispiels eines derartigen Feineinschnittes 16, welcher aus über den Umfang des Fahrzeugluftreifens hintereinander in alternierender Reihenfolge angeordneten ersten Umfangsabschnitten 16 und zweiten Umfangsabschnitte 17 ausgebildet ist. Dabei erstrecken sich die ersten Umfangsabschnitte 16 und die zweiten Umfangsabschnitte 17 jeweils in ihrer Haupterstreckung unter Einschluss eines Winkels α zur Umfangsrichtung U. Die Umfangserstreckungsabschnitte 16 sind dabei in der in Fig.5 von unten nach oben hin dargestellten Umfangsrichtung U längs ihrer Erstreckung zur rechten axialen Seite hin und die Umfangserstreckungsabschnitte 17 zur linken axialen Seite hin geneigt. Die Neigungsorientierung der beiden Abschnitte 16 und 17 ist somit gegenläufig. Zwischen den hintereinander angeordneten Umfangserstreckungsabschnitten 16 und 17 ist der Feineinschnitt 15 jeweils mit Knickstellen ausgebildet. Die Umfangserstreckungsabschnitte 16 und 17 bilden somit ein zickzackförmiges Muster des Feineinschnitts 15. Der Feineinschnitt 15 ist dabei in den jeweils senkrecht zu den Erstreckungsrichtungen der jeweiligen Abschnitte 16 und 17 ausgebildeten Querschnitten mit einer Querschnittkontur analog zu dem im Zusammenhang mit den Ausführungsbeispielen der Fig. 1 bis 4 gezeigten und/oder beschriebenen Feineinschnitten 9 ausgebildet mit einem radial äußeren Erstreckungsabschnitt 11 und mit einem radial inneren Erstreckungsabschnitt 12, welcher kanalförmig erweitert ausgebildet ist. Die Tiefenerstreckungs-, Höhen- und Breitenmaße sind jeweils wie zu den Ausführungen der Fig.1 bis 4 dargestellt und erläutert ausgebildet.

In einer nicht dargestellten Ausführungsform ist in einer Umfangsrippe ein Feineinschnitt aus zwei in axialer Richtung A nebeneinander, angeordneten Abschnitten 16 und 17 gebildet, welche jeweils unter einem Neigungswinkel α zur Umfangsrichtung U verlaufen, jedoch mit gegenläufiger Neigung ausgerichtet sind. Derartig ausgebildete Feineinschnitte sind über den gesamten Umfang des Fahrzeugluftreifens in der Umfangsrippe ausgebildet und bilden somit eine Wiederholung von pfeilförmigen Feineinschnitten, die jeweils in ihrer Querschnittkontur - wie oben beschrieben - ausgebildet sind.

Die Winkel α sind jeweils mit 0°<α<45° ausgebildet. In den gewählten Ausführungsbeispielen ist α mit 20°≤ α≤45° ausgebildet.

Fig. 6 zeigt ein Ausführungsbeispiel, bei dem in einer Umfangsrippe 5 über den Umfang des Reifens verteilt in einer ersten axialen Position des Reifens in Umfangsrichtung U des Fahrzeugluftreifens hintereinander angeordnet in Umfangsrichtung U ausgerichtete Feineinschnitte 18 der Erstreckungslänge L₁ beabstandet voneinander ausgebildet sind und bei dem in einer axial benachbarten, beabstandeten Position ebenfalls über den Umfang des Fahrzeugluftreifens verteilt in Umfangsrichtung U hintereinander angeordnete, in Umfangsrichtung U ausgerichtete Feineinschnitte 19 der Erstreckungslänge L₁ angeordnet sind. Die Feineinschnitte 19 und die Feineinschnitte 18 sind dabei in Umfangsrichtung U derart versetzt zueinander angeordnet, dass jeweils ein Feineinschnitt 18 an seinem in Umfangserstreckungsrichtung U ausgebildeten Erstreckungsanfang einen ihm in Umfangsrichtung vorgeordneten Feineinschnitt 19 in Umfangserstreckungsrichtung U über eine Erstreckungslänge a überlappt und dass er an seinem in Umfangsrichtung U ausgebildeten Ende ebenfalls einen ihm nachgeordneten Feineinschnitt 19 in Umfangsrichtung U über eine Erstreckungslänge a überlappt. Ebenso ist jeder Feineinschnitt 19 an seinem in Umfangserstreckungsrichtung ausgebildeten Erstreckungsbeginn mit einem in Umfangserstreckungsrichtung ihm vorgeordneten Feineinschnitt 18 und an seinem Erstreckungsende mit einem in Umfangserstreckungsrichtung ihm nachgeordneten Feineinschnitt 18 über eine in Umfangsrichtung U gemessene Erstreckungslänge a überlappt ausgebildet. Die Erstreckungslänge a der Überlappung ist dabei mit a < (L₁ /2) ausgebildet. Die Feineinschnitte 18 und 19 sind jeweils in ihren senkrecht zu ihrer Haupterstreckungsrichtung gebildeten Querschnittebenen mit einem Querschnittkontur ausgebildet, wie im Zusammenhang mit den Feineinschnitten 9 zu den Ausführungen der Fig.1 bis 4 dargestellt und erläutert.

Fig.7 und Fig.8 zeigen ein Ausführungsbeispiel, bei welchem in einer Umfangsrippe 5 - wie im Ausführungsbeispiel von Fig. 5 dargestellt - unter Einschluss eines Neigungswinkels α zur Umfangsrichtung verlaufend Feineinschnitte 14 in Umfangsrichtung U hintereinander angeordnet sind. In Umfangsrichtung U zwischen zwei hintereinander angeordneten Feineinschnitten 14 ist jeweils ein anderer Feineinschnitt 20 ausgebildet, welcher sich ebenfalls unter dem Neigungswinkel α zur Umfangsrichtung U parallel zu den Feineinschnitten 14 verlaufend erstreckt. Die Feineinschnitt 20 sich - wie in Fig. 8 zu erkennen ist - im Wesentlichen wie der Feineinschnitt 14 ausgebildet, jedoch sind die Feineinschnitte 20 in ihrem radial äußeren Erstreckungsbereich 11 in dem unmittelbaren radialen Anschluss an die radial äußere Oberfläche 10 mit einem in radialer Richtung R ausgebildeten kurzen Erstreckungsabschnitt der Erstreckungstiefe T₄ - gemessen von der radial äußeren Oberfläche 10 - und der senkrecht zur Haupterstreckungsrichtung der Feineinschnitte 20 gemessenen Erstreckungsbreite B₄ ausgebildet, mit B₄ > B₃ und mit T₄ < (0,5 T₃). In diesem Ausführungsbeispiel bilden diese Feineeinschnitte 20 im radial äußeren Oberflächenbereich beim Neureifen zusätzliche Schrägrillen und sind mit ihrem größeren radialen Erstreckungsabschnitt mit kleiner Spaltbreite B₃ des Feineinschnitts 20 ausgebildet.

Fig. 9 zeigt ein weiteres Ausführungsbeispiel, bei dem in einer Umfangsrippe 5 ein Feineinschnitt 22 ausgebildet ist, welcher in Umfangsrichtung U des Reifens hinweg aus in alternierender Reihenfolge hintereinander angeordneten Einschnittsabschnitten 23 und 24 ausgebildet ist. Die Einschnittsabschnitte 23 sind dabei in ihren senkrecht zur Erstreckungsrichtung des Feineinschnitts 22 gemessenen Querschnitten jeweils mit analoger Querschnittskontur zu den in den Fig. 1 bis4 dargestellten und beschriebenen Feineinschnitten 9 ausgebildet. Die Einschnittabschnitte 24 sind in ihren senkrecht zur Erstreckungsrichtung des Feineinschnitts 22 gemessenen Querschnitten jeweils mit analoger Querschnittskontur zu den in Fig. 8 dargestellten Feineinschnitten 20 ausgebildet.

In den oben dargestellten und/oder beschriebenen Ausführungsbeispielen sind die Feineinschnitte 9, 14,19, 18, 20, 23 bzw. Feineinschnittsabschnitte 16,17 in ihrer Haupterstreckungsrichtung in der radial äußeren Oberfläche jeweils gradlinig ausgebildet.

In den dargestellten und/oder beschriebenen Ausführungsbeispielen ist die Erstreckungsbreite B₃ längs der gesamten Erstreckung des jeweiligen Abschnittes 11 konstant ausgebildet.

In den dargestellten Ausführungsbeispielen ist der Feineinschnitt jeweils im radial äußeren Erstreckungsbereich 11 längs seiner Erstreckung in radialer Richtung R geradlinig unter Einschluss eines Winkels zur radialen R ausgebildet, welcher in den dargestellten Ausführungsbeispielen jeweils 0° beträgt.

In anderer, nicht dargestellter Ausführung, ist der radial äußere Erstreckungsbereich 11 in den Querschnittebenen senkrecht zur Haupterstreckung des jeweiligen Feineinschnitts unter Einschluss eines Neigungswinkels zwischen 0° und 5° zur radialen R ausgebildet, gemessen im Schnittpunkt mit der radial äußeren, die Mantelfläche bildenden Oberfläche 10.

In anderer, nicht dargestellter Ausführungsform, ist der Feineinschnitt jeweils in seinem radial äußeren Erstreckungsbereich 11, ausgehend von der die Mantelfläche 10 bildenden Oberfläche bis zur Tiefe T₃ nicht geradlinig verlaufend, sondern leicht gekrümmt, leicht gewellt oder - wie in Fig.10 dargestellt - gezackt verlaufend ausgebildet.

In anderer, nicht dargestellter Ausführung, sind die Feineinschnitte in der radial äußeren, die Mantelfläche bildenden Oberfläche 10 längs ihrer Haupterstreckungsrichtung gewellt oder gezackt verlaufend ausgebildet. Eine derartige gezackt vorlaufende Ausbildung eines Feineinschnitts ist beispielsweise auch in Fig.5 anhand des Feineinschnitts 15 dargestellt.

In den oben genannten Ausführungsbeispielen sind die Profilbänder als Umfangsrippen ausgebildet. In anderer - nicht dargestellter - Ausführung sind die Profilbänder als Profilblockreihen bekannter Art ausgebildet, welche aus in Umfangsrichtung U hintereinander angeordneten und jeweils durch Quer- bzw. Schrägrillen voneinander getrennten Profilblockelementen bekannter Art ausgebildet sind.

### Bezugszeichenliste

### (Teil der Beschreibung)

- 1: Nutzfahrzeugluftreifen
- 2: Umfangsrille
- 3: Umfangsrille
- 4: Umfangsrille
- 5: Umfangsrippe
- 6: Umfangsrippe
- 7: Rillengrund
- 8: Abriebindikator (TWI)
- 9: Feineinschnitt
- 10: Radial äußere Oberfläche
- 11: Radial äußerer Erstreckungsbereich
- 12: Als Kanal ausgebildeter radial innerer Erstreckungsbereich
- 13: Kanalgrund
- 14: Einschnitt
- 15: Einschnitt
- 16: Abschnitt
- 17: Abschnitt
- 18: Einschnitt
- 19: Einschnitt
- 20: Einschnitt
- 21: Abschnitt
- 22: Einschnitt
- 23: Abschnitt
- 24: Abschnitt

## Patentansprüche

1. Fahrzeugluftreifen für Nutzfahrzeuge mit einem profilierten Laufstreifen mit in Umfangsrichtung U des Fahrzeugluftreifens erstreckten Profilbändern (5,6), welche in radialer Richtung R nach außen von einer die Bodenkontaktoberfläche bildenden Mantelfläche (10) des Fahrzeugluftreifens begrenzt werden, und mit Rillen (2,3,4), welche jeweils zwei benachbarte Profilbänder (5,6) voneinander trennen und in radialer Richtung R des Fahrzeugluftreifens nach innen hin durch einen Rillengrund (7) begrenzt werden, sowie mit Einschnitten (9,18,19,14,15) in von derartigen Rillen (2,3,4) begrenzten Profilbändern (5,6), welche sich in radialer Richtung R des Fahrzeugluftreifens ausgehend von der Mantelfläche (10) nach innen in einem ersten radialen Erstreckungsbereich (11) bis in eine Tiefe T₃ als Einschnitt erstrecken, welcher eine Einschnittbreite B₃ aufweist, und ab der Tiefe T₃ in einem zweiten radialen Erstreckungsbereich (12) als erweiterter Kanal mit einer Kanalbreite B und einer in radialer Richtung R gemessenen Kanalhöhe H ausgebildet sind,
wobei der zweite radiale Erstreckungsbereich (12) dieser Einschnitte (9,18,19,14,15) eines Profilbandes (5,6) sich in radialer Richtung R nach innen bis in eine Position unterhalb des Rillengrundes (7) der das Profilband (5,6) begrenzenden Rille (2,3,4) erstreckt,
**dadurch gekennzeichnet,**
**dass** Abriebindikatoren (TWI) (8) in einer oder mehrerer - insbesondere in allen - dieser Rillen (2,3,4) zur Anzeige einer Mindestprofiltiefe der Fahrzeugluftreifen im Normalbetrieb des Fahrzeugluftreifens ausgebildet sind, und der erste radiale Erstreckungsbereich (11) des Einschnittes jeweils in radialer Richtung R des Reifens nach innen in einer Position im radialen Abstand T₂≥ 0mm oberhalb der durch den Abriebindikator (TWI) (8) in der nächstliegend angeordneten Rille angezeigten Mindestprofiltiefe im Normalbetrieb endet.

2. Fahrzeugluftreifen gemäß den Merkmalen von Anspruch 1,
wobei in wenigstens einem Profilband (5) axial voneinander beabstandet mehrere derartiger -insbesondere in ihrer Haupterstreckungsrichtung parallel zueinander ausgerichteter - Einschnitte (18,19) ausgebildet sind.

3. Fahrzeugluftreifen gemäß den Merkmalen von Anspruch 1 oder 2,
wobei auch die Einschnitte (9,18,19) in Umfangsrichtung U des Fahrzeugluftreifens erstreckt sind.

4. Fahrzeugluftreifen gemäß den Merkmalen von Anspruch 3,
wobei in wenigstens zwei axial von einander beabstandeten Positionen im Profilband (5) über den Umfang des Fahrzeugluftreifens verteilt mehrere in Umfangsrichtung U des Fahrzeugluftreifens erstreckte Einschnitte (18,19) angeordnet sind, wobei die in der ersten axialen Position angeordneten Einschnitte (18) und die in der zweiten axialen Position angeordneten Einschnitte (19) jeweils in ihrer Umfangsposition zueinander unter Überlappung ihrer Umfangserstreckungslänge versetzt angeordnet sind.

5. Fahrzeugluftreifen gemäß den Merkmalen von Anspruch 3,
wobei auch die Einschnitte (9) in Umfangsrichtung U des Fahrzeugluftreifens über den gesamten Umfang des Fahrzeugluftreifens erstreckt sind.

6. Fahrzeugluftreifen gemäß den Merkmalen von Anspruch 1 oder 2,
wobei die Einschnitte (14) als schräg verlaufende Einschnitte unter Einschluss eines Winkels α zur Umfangsrichtung U des Fahrzeugluftreifens mit 0°<α<45°-insbesondere mit 20°≤α≤45°- erstreckt sind.

7. Fahrzeugluftreifen gemäß den Merkmalen von Anspruch 6,
wobei Einschnitte (15) durch eine Knickstelle in zwei benachbarte Erstreckungsbereiche (16,17) aufgeteilt sind, in denen die Einschnitte (15) jeweils mit unterschiedlicher Neigung ausgebildet sind.

8. Fahrzeugluftreifen gemäß den Merkmalen von einem oder mehreren der vorangegangenen Ansprüche,
wobei der zweite radiale Erstreckungsbereich (12) des Einschnittes jeweils in radialer Richtung R des Reifens nach innen bis in eine Tiefe T₁ mit 5mm≤ T₁≤6mm unterhalb der durch den Abriebindikator (TWI) (8) in der nächstliegend angeordneten Rille (2,3,6) angezeigten Mindestprofiltiefe im Normalbetrieb reicht.

9. Fahrzeugluftreifen gemäß den Merkmalen von einem oder mehreren der vorangegangenen Ansprüche,
wobei die Erstreckungstiefe T₃ des ersten Erstreckungsbereichs (11) des Einschnittes jeweils mit T₃≥ (0,5 P_{T}) ausgebildet ist, wobei P_{T} die maximale Profiltiefe in der Rille (2,3,4) ist.

10. Fahrzeugluftreifen gemäß den Merkmalen von einem oder mehreren der vorangegangenen Ansprüche,
mit einer Kanalbreite B mit B₃≤ B ≤ 5mm.

11. Fahrzeugluftreifen gemäß den Merkmalen von einem oder mehreren der vorangegangenen Ansprüche,
mit einer Einschnittsbreite B₃ mit 0,5mm ≤ B₃≤ 1,5mm.

12. Fahrzeugluftreifen gemäß den Merkmalen von einem oder mehreren der vorangegangenen Ansprüche,
wobei der erste radiale Erstreckungsbereich (11) des Einschnittes (9) längs seiner radialen Erstreckung mit einem gekrümmten, wellenförmigen oder zickzackförmigen Verlauf ausgebildet ist.

## Claims

1. Pneumatic vehicle tyre for commercial vehicles, having a profiled tread with profile strips (5, 6) which extend in the circumferential direction U of the pneumatic vehicle tyre and are bounded towards the outside in a radial direction R by a lateral surface (10), forming the ground contact surface, of the pneumatic vehicle tyre, and having grooves (2, 3, 4) which each separate two adjacent profile strips (5, 6) from one another and are bounded towards the inside in the radial direction R of the pneumatic vehicle tyre by a groove bottom (7), and having sipes (9, 18, 19, 14, 15) in profile strips (5, 6) bounded by such grooves (2, 3, 4), which extend inwards, in the radial direction R of the pneumatic vehicle tyre, starting from the lateral surface (10), down to a depth T₃ in a first radial extension region (11), as sipes which have a sipe width B₃, and, starting from the depth T₃, are formed, in a second radial extension region (12), as an expanded channel with a channel width B and a channel height H measured in the radial direction R,
wherein the second radial extension region (12) of these sipes (9, 18, 19, 14, 15) in a profile strip (5, 6) extends inwards in the radial direction R as far as a position beneath the groove bottom (7) of the groove (2, 3, 4) bounding the profile strip (5, 6),
**characterized**
**in that** wear indicators (TWI) (8) are formed in one or more - in particular in all - of these grooves (2, 3, 4) in order to indicate a minimum profile depth of the pneumatic vehicle tyre in normal operation of the pneumatic vehicle tyre,
and
the first radial extension region (11) of the sipe ends in each case towards the inside in the radial direction R of the tyre in a position at a radial spacing T₂≥0 mm above the minimum profile depth indicated by the wear indicator (TWI) (8) in the groove arranged closest, in normal operation.

2. Pneumatic vehicle tyre according to the features of Claim 1,
wherein a plurality of such sipes (18, 19) - oriented in particular parallel to one another in their main extension direction - are formed in an axially spaced-apart manner in at least one profile strip (5).

3. Pneumatic vehicle tyre according to the features of Claim 1 or 2,
wherein the sipes (9, 18, 19) also extend in the circumferential direction U of the pneumatic vehicle tyre.

4. Pneumatic vehicle tyre according to the features of Claim 3,
wherein a plurality of sipes (18, 19) that extend in the circumferential direction U of the pneumatic vehicle tyre are arranged in a manner distributed around the circumference of the pneumatic vehicle tyre in at least two axially spaced-apart positions in the profile strip (5), wherein the sipes (18) arranged in the first axial position and the sipes (19) arranged in the second axial position are each arranged in an offset manner with respect to one another in their circumferential position, with their circumferential extension lengths overlapping.

5. Pneumatic vehicle tyre according to the features of Claim 3,
wherein the sipes (9) also extend in the circumferential direction U of the pneumatic vehicle tyre around the entire circumference of the pneumatic vehicle tyre.

6. Pneumatic vehicle tyre according to the features of Claim 1 or 2,
wherein the sipes (14) extend as obliquely extending sipes enclosing an angle α with the circumferential direction U of the pneumatic vehicle tyre of 0°<α<45° - in particular of 20°≤α≤45°.

7. Pneumatic vehicle tyre according to the features of Claim 6,
wherein sipes (15) are subdivided by a kink into two adjacent extension regions (16, 17) in which the sipes (15) are formed in each case at a different inclination.

8. Pneumatic vehicle tyre according to the features of one or more of the preceding claims,
wherein the second radial extension region (12) of the sipe reaches in each case inwards in the radial direction R of the tyre down to a depth T₁ of 5 mm≤T₁≤6 mm below the minimum profile depth indicated by the wear indicator (TWI) (8) in the groove (2, 3, 6) arranged closest, in normal operation.

9. Pneumatic vehicle tyre according to the features of one or more of the preceding claims,
wherein the extension depth T₃ of the first extension region (11) of the sipe is formed in each case with T₃≥(0.5 P_{T}), wherein P_{T} is the maximum profile depth in the groove (2, 3, 4).

10. Pneumatic vehicle tyre according to the features of one or more of the preceding claims,
having a channel width B of B₃≤B≤5 mm.

11. Pneumatic vehicle tyre according to the features of one or more of the preceding claims,
having a sipe width B₃ of 0.5 mm≤B₃≤1.5 mm.

12. Pneumatic vehicle tyre according to the features of one or more of the preceding claims,
wherein the first radial extension region (11) of the sipe (9) is formed with a curved, undulating or zigzag-shaped course along its radial extension.

## Revendications

1. Pneumatique pour véhicules utilitaires avec une bande de roulement profilée avec des bandes profilées (5, 6) s'étendant dans la direction périphérique U du pneumatique de véhicule, qui sont limitées en direction radiale vers l'extérieur par une surface latérale (10) du pneumatique de véhicule formant la surface de contact avec le sol, et avec des rainures (2, 3, 4) qui séparent respectivement l'une de l'autre deux bandes profilées voisines (5, 6) et qui sont limitées en direction radiale R du pneumatique de véhicule vers l'intérieur par un fond de rainure (7), ainsi qu'avec des entailles (9, 18, 19, 14, 15) dans des bandes profilées (5, 6) limitées par ces rainures (2, 3, 4), qui s'étendent en direction radiale R du pneumatique de véhicule à partir de la surface latérale (10) vers l'intérieur dans une première zone d'extension radiale (11) jusqu'à une profondeur T₃ sous forme d'entaille, qui présente une largeur d'entaille B₃, et à partir de la profondeur T₃ dans une deuxième zone d'extension radiale (12) sous forme de canal élargi avec une largeur de canal B et une hauteur de canal H mesurée en direction radiale R,
dans lequel la deuxième zone d'extension radiale (12) de ces entailles (9, 18, 19, 14, 15) d'une bande profilée (5, 6) s'étend en direction radiale R vers l'intérieur jusqu'à une position située en dessous du fond de rainure (7) de la rainure (2, 3, 4) limitant la bande profilée (5, 6),
**caractérisé en ce que** des indicateurs d'usure (TWI)(8) sont formés dans une ou plusieurs - en particulier dans la totalité - de ces rainures (2, 3, 4) pour indiquer une profondeur de profil minimale du pneumatique de véhicule en fonctionnement normal du pneumatique de véhicule, et la première zone d'extension radiale (11) de l'entaille se termine respectivement en direction radiale R du pneumatique vers l'intérieur dans une position à une distance radiale T₂ ≥ 0 mm au-dessus de la profondeur de profil minimale indiquée par l'indicateur d'usure (TWI) (8) dans la rainure la plus proche en fonctionnement normal.

2. Pneumatique de véhicule selon les caractéristiques de la revendication 1, dans lequel plusieurs de ces entailles (18, 19) - orientées parallèlement l'une à l'autre en particulier dans leur direction d'extension principale - sont formées à distance axiale l'une de l'autre dans au moins une bande profilée (5).

3. Pneumatique de véhicule selon les caractéristiques de la revendication 1 ou 2, dans lequel les entailles (9, 19, 18) s'étendent aussi dans la direction périphérique U du pneumatique de véhicule.

4. Pneumatique de véhicule selon les caractéristiques de la revendication 3, dans lequel plusieurs entailles (18, 19) s'étendant dans la direction périphérique U du pneumatique de véhicule et réparties sur la périphérie du pneumatique de véhicule sont disposées dans au moins deux positions axialement espacées l'une de l'autre dans la bande profilée (5), dans lequel les entailles (18) disposées dans la première position axiale et les entailles (19) disposées dans la deuxième position axiale sont respectivement disposées en décalage l'une par rapport à l'autre dans leur position périphérique avec chevauchement de leur longueur d'extension périphérique.

5. Pneumatique de véhicule selon les caractéristiques de la revendication 3, dans lequel les entailles (9) s'étendent aussi dans la direction longitudinale U du pneumatique de véhicule sur toute la périphérie du pneumatique de véhicule.

6. Pneumatique de véhicule selon les caractéristiques de la revendication 1 ou 2, dans lequel les entailles (14) s'étendent sous forme d'entailles orientées en oblique en formant un angle α par rapport à la direction périphérique U du pneumatique de véhicule avec 0°<α<45° - en particulier avec 20°≤α≤45°.

7. Pneumatique de véhicule selon les caractéristiques de la revendication 6, dans lequel des entailles (15) sont divisées par un point de rebroussement en deux zones d'extension voisines (16, 17), dans lesquelles les entailles (15) sont respectivement formées avec une inclinaison différente.

8. Pneumatique de véhicule selon les caractéristiques d'une ou de plusieurs des revendications précédentes, dans lequel la deuxième zone d'extension radiale (12) de l'entaille arrive dans la direction radiale R du pneumatique vers l'intérieur jusqu'à une profondeur T₁ avec 5 mm≤T₁≤6 mm, en dessous de la profondeur de profil minimale indiquée par l'indicateur d'usure (TWI)(8) dans la rainure située le plus près (2, 3, 6) en fonctionnement normal.

9. Pneumatique de véhicule selon les caractéristiques d'une ou de plusieurs des revendications précédentes, dans lequel la profondeur d'extension T₃ de la première zone d'extension (11) de l'entaille est chaque fois formée avec T₃≥(0,5 P_{T}), dans laquelle P_{T} est la profondeur de profil maximale dans la rainure (2, 3, 4).

10. Pneumatique de véhicule selon les caractéristiques d'une ou de plusieurs des revendications précédentes, avec une largeur de canal B avec B₃≤B≤5 mm.

11. Pneumatique de véhicule selon les caractéristiques d'une ou de plusieurs des revendications précédentes, avec une largeur d'entaille B₃ avec 0,5 mm≤Ba≤1,5 mm.

12. Pneumatique de véhicule selon les caractéristiques d'une ou de plusieurs des revendications précédentes, dans lequel la première zone d'extension radiale (11) de l'entaille (9) est formée le long de son extension radiale avec une allure incurvée, ondulée ou en zigzag.
